## Europäisches Patentamt

## European Patent Office

## Office européen des brevets

(19)

(11) Veröffentlichungsnummer: **0 000 372**
**B1**

(12)

# EUROPÄISCHE PATENTSCHRIFT

(45) Veröffentlichungstag der Patentschrift:
**07.01.81**

(51) Int. Cl.³: **F 16 C 33/38,** F 16 C 33/46,
F 16 C 43/08

(21) Anmeldenummer: **78100310.8**

(22) Anmeldetag: **06.07.78**

(54) **Verfahren zur Herstellung eines Wälzlagerkäfigs.**

(30) Priorität: **13.07.77 DE 2731584**

(43) Veröffentlichungstag der Anmeldung:
**24.01.79 Patentblatt 79/2**

(45) Bekanntmachung des Hinweises auf die Patenterteilung:
**07.01.81 Patentblatt 81/1**

(84) Benannte Vertragsstaaten:
**FR GB SE**

(56) Entgegenhaltungen:
**DE-A-1 952 107**
**DE-A-2 337 915**
**DE-B-1 001 062**
**GB-A-1 370 890**

(73) Patentinhaber: **SKF KUGELLAGERFABRIKEN GMBH,
Ernst-Sachs-Strasse 2-8 Postfach 1440,
D-8720 Schweinfurt (DE)**

(72) Erfinder: **Kunkel, Heinrich, Dr., Wilhelm-Leibl-Weg 16,
D-8720 Schweinfurt (DE)**
Erfinder: **Olschewski, Armin, Stösselstrasse 8,
D-8720 Schweinfurt (DE)**
Erfinder: **Brandenstein, Manfred, Tränkgasse 57,
D-8781 Aschfeld (DE)**
Erfinder: **Schürger, Rainer, Nr. 361, D-8722 Schwanfeld
(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

Verfahren zur Herstellung eines Wälzlagerkäfigs

Die Erfindung bezieht sich auf ein Verfahren zur Herstellung eines Wälzlagerkäfigs mit Taschen zur Aufnahme der Wälzkörper, in welchen diese durch am Käfig angeformte, bei ihrem Einsetzen elastisch nachgebende Haltevorsprünge gehalten werden.

Durch die GB-A 1 370 890 ist bereits ein Wälzlagerkäfig mit Taschen zur Aufnahme der Wälzkörper bekannt, in welchen diese durch am Käfig angeformte, bei ihrem Einsetzen elastisch nachgebende Haltevorsprünge gehalten werden. Bei diesem bekannten Käfig sind Vorsprünge vorgesehen, die aus dem Käfigmaterial selbst herausgearbeitet sind und sich zwischen zwei benachbarten Haltevorsprüngen vom Käfiggrundkörper aus erstrecken.

In der DE-A 1 952 107 wird ferner ein gleichartiger Käfig beschrieben, bei dem von den Haltevorsprüngen zweier benachbarter Käfigtaschen jeweils ein Einschnitt gebildet wird.

Diese bekannten Käfige springen aber bei ungünstigen Belastungen leicht aus dem Lager heraus, so dass das Lager zerstört werden kann.

Hier will die Erfindung Abhilfe schaffen. Die Erfindung, wie sie in den Ansprüchen gekennzeichnet ist, löst die Aufgabe, ein Verfahren zur Herstellung eines Wälzlagerkäfigs der vorstehend beschriebenen Art zu schaffen, bei dem die Wälzkörper leicht in die Käfigtaschen eingesetzt, aber nur sehr schwer wieder demontiert werden können.

Die durch die Erfindung erreichten Vorteile sind im wesentlichen darin zu sehen, dass der Käfig nach dem Einsetzen der Wälzkörper in die Käfigtaschen auch bei ungünstigen Belastungen nicht aus dem Lager herausspringen kann, so dass die Betriebssicherheit gewährleistet ist.

Durch die DE-B 1 001 062 war es bei Wälzlagern bekannt, nach dem Einsetzen der Wälzkörper in den Käfig, der nicht mit elastisch federnden Haltevorsprüngen versehen ist, Haltevorsprünge aus dem Käfigmaterial selbst herauszuformen, die sich unmittelbar auf die Wälzkörper legen und diese im Käfig festhalten.

Diese Herstellungsweise hat vor allem den Nachteil, dass die Wälzkörper bei der Anformung der Haltevorsprünge durch besondere Vorrichtungen gehalten und ausgerichtet werden müssen. Beim erfindungsgemässen Verfahren wird die Halterung und Ausrichtung der Wälzkörper dagegen durch die an sich bekannten, beim Einsetzen der Wälzkörper elastisch nachgebenden Haltevorsprünge bewirkt, wogegen die nachträglich herausgeformten Vorsprünge den Zweck haben, das federnde Öffnen der elastischen Haltevorsprünge zu verhindern.

Die Erfindung wird nachstehend anhand von in der Zeichnung dargestellten Ausführungsbeispielen näher erläutert.

Es zeigen:

Fig. 1 einen Teil einer Abwicklung eines nach dem erfindungsgemässen Verfahren hergestellten Schnappkäfigs aus Kunststoff im Schnitt, bei dem die Haltevorsprünge für die Wälzkörper durch nachträglich verformte Zapfen fixiert sind,

Fig. 2 einen Teil eines Käfigs für ein Radial-Zylinderrollenlager im Schnitt mit angeformten Lappen, die nach dem Einsetzen der Zylinderrollen umgeformt werden und zur Sicherung der Haltevorsprünge dienen,

Fig. 3 einen Teil einer Abwicklung eines Schnappkäfigs mit Einschnitten an den Stegenden, die durch herausgeformte Vorsprünge geschlossen sind.

Fig. 4 eine Ansicht des Käfigs nach Fig. 3 auf die Stirnseiten der Stegenden und

Fig. 5 einen Teil einer Abwicklung eines glasfaserverstärkten Schnappkäfigs aus Kunststoff, bei dem die Haltevorsprünge zweier benachbarter Käfigtaschen durch ultraschallverformte Vorsprünge abgestützt werden.

Gleiche Teile sind in der Zeichnung mit gleichen Bezugszahlen versehen.

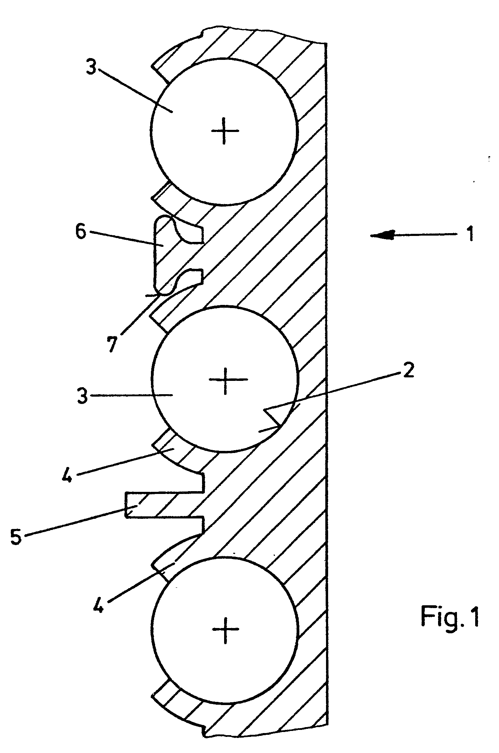

Der in der Fig. 1 dargestellte Schnappkäfig 1 ist aus Kunststoff gefertigt und besitzt hohlkugelig ausgebildete Taschen 2 zur Aufnahme der Kugeln 3, die an den offenen Enden mit Haltevorsprüngen 4 versehen sind. Die Haltevorsprünge 4 sind elastisch ausgeführt, so dass der Käfig 12 ohne Schwierigkeiten auf die Kugeln 3 aufgeschnappt werden kann. Damit der Käfig 1 auch bei ungünstigen Belastungen nicht aus dem Lager springt, sind jeweils zwischen den Haltevorsprüngen 4 zweier benachbarter Käfigtaschen 2 angeformte Vorsprünge 5 vorgesehen, die nach dem Aufschnappen des Käfigs 1 auf die Kugeln 3 mit einem angestauchten Kopfteil 6 versehen werden, der sich mit dem Rand 7 aussen an die Haltevorsprünge 4 anlegt. Hierdurch werden die Haltevorsprünge 4 in ihrer Lage fixiert und ein Herausfallen des Käfigs 1 aus dem Lager sicher vermieden. Es ist zweckmässig, das Kopfteil 6 nicht bis zur Anlage an die Haltevorsprünge 4 zu verformen, damit die Kugeln 3 beim Anstauchen des Kopfteils 6 nicht in den Käfigtaschen 2 festgeklemmt werden können.

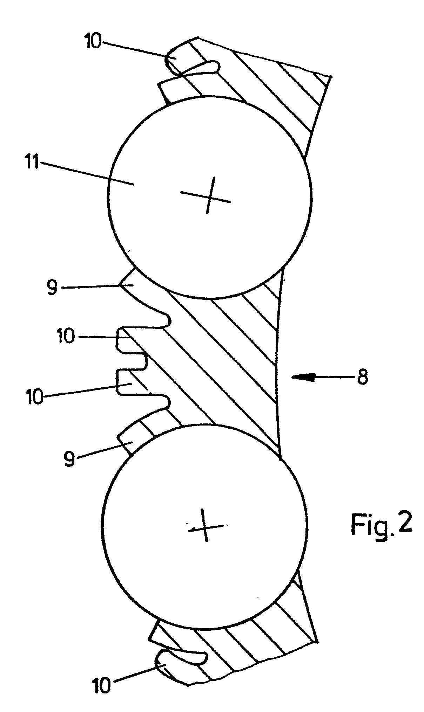

Bei dem in der Fig. 2 dargestellten Käfig 8 für ein Radial-Zylinderrollenlager sind neben jedem Haltevorsprung 9 angeformte, radial nach aussen ragende Lappen 10 vorgesehen, die nach dem Einsetzen der Zylinderrollen 11 in die Käfigtaschen durch Ultraschall verformt werden, so dass sie mit ihren freien Enden bis nahe an die Haltevorsprünge 9 heranreichen bzw. aussen an den Haltevorsprüngen 9 anliegen und diese unterstützen.

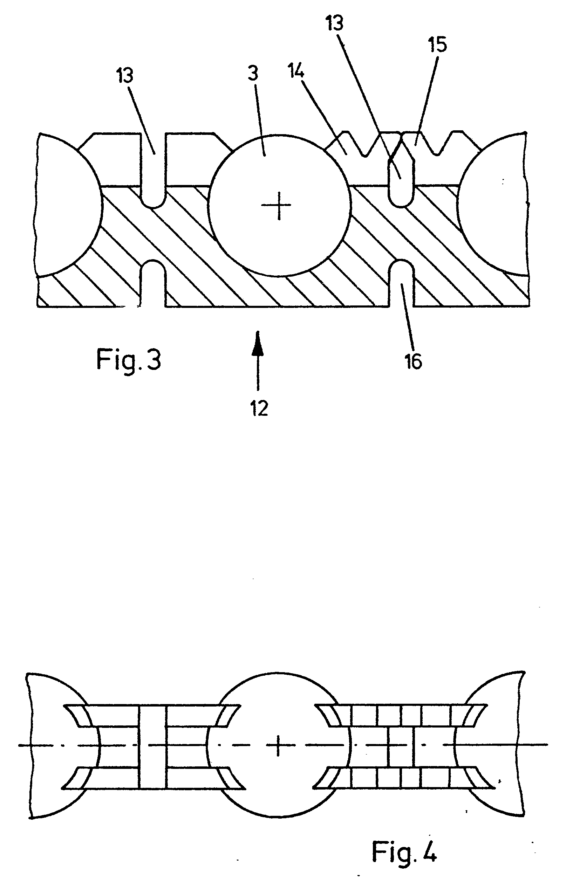

Beim Ausführungsbeispiel nach den Fig. 3 und 4 ist der Schnappkäfig 12, ausgehend von den Stirnflächen an den Stegenden, mit axial verlaufenden Einschnitten 13 versehen, die die Haltevorsprünge 14 voneinander trennen. Nach dem Aufschnappen des Käfigs 12 auf die Kugeln 3 werden aus den Stegenden Abstützvorsprünge 15 herausgeformt und so gebogen, dass zwischen ihren freien Enden ein Spiel verbleibt bzw. sie mit ihren freien Enden aneinanderstossen und die Haltevorsprünge 14 abstützen. Damit der Käfig 12 elastischer wird, ist es ferner vorteilhaft, ausgehend vom Käfigrücken Ausnehmungen 16 vorzusehen, die ebenfalls nach dem Einbau des Käfigs 12 durch geeignete Massnahmen wieder verschlossen werden können.

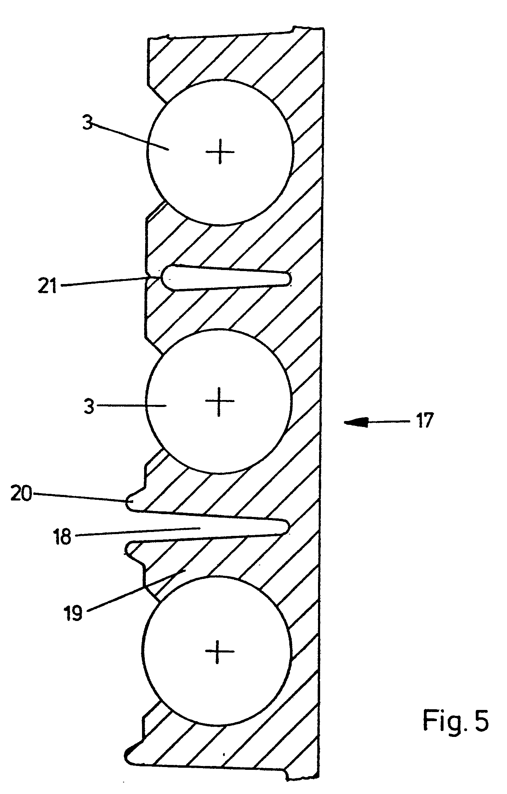

Der Käfig 17 nach der Fig. 5 zeigt eine Ausführungsform, die besonders für Schnappkäfige aus glasfaserverstärktem Kunststoff geeignet ist. Die Käfigstege sind bei dieser Ausführung mit besonders tiefen Einschnitten 18 versehen, so dass die Haltevorsprünge 19 des aus einem verhältnismässig harten Kunststoffmaterial hergestellten Käfigs beim Aufschnappen auf die Kugeln 3 elastisch ausfedern können. An den Enden der Haltevorsprünge 19 ist jeweils ein Abstützvorsprung 20 angeformt, der, nach dem Einbau des Käfigs 17, durch Ultraschall so weit in den entsprechenden Einschnitt 18 gebogen wird, bis sich zwischen den Enden von zwei benachbarten Abstützvorsprüngen 20 nur noch ein geringes Spiel befindet bzw. bis ihre Enden 21 aneinanderliegen. Auf diese Weise werden die Haltevorsprünge 19 an einer Bewegung in Umfangsrichtung gehindert und der Käfig sicher im Lager gehalten.

Diese beschriebenen Ausführungsformen stellen nur Beispiele eines nach dem erfindungsgemässen Verfahren hergestellten Wälzlagerkäfigs dar. Die in der Fig. 5 dargestellten Einschnitte 18 können bei einem elastischeren Käfigwerkstoff auch weniger tief ausgeführt werden. Ferner kann das Spiel zwischen den umgeformten Käfigteilen und den Haltevorsprüngen so gross ausgeführt werden, dass ein Herausschnappen des Käfigs gerade noch verhindert wird.

**Patentansprüche**

1. Verfahren zur Herstellung eines Wälzlagerkäfigs mit Taschen zur Aufnahme der Wälzkörper, in welchen diese durch am Käfig angeformte, bei ihrem Einsetzen elastisch nachgebende Haltevorsprünge gehalten werden und jeweils zwischen zwei benachbarten Haltevorsprüngen ein Vorsprung vorgesehen ist, der aus dem Käfigmaterial herausgearbeitet ist und sich vom Grundkörper aus erstreckt, dadurch gekennzeichnet, dass die zwischen den Haltevorsprüngen (4, 9) zweier benachbarter Käfigtaschen (2) angeordneten Vorsprünge (5, 10) nach dem Einführen der Wälzkörper (3, 11) so bleibend verformt werden, dass sie sich an die benachbarten Haltevorsprünge (4, 9) anlegen oder bis nahe an diese heranreichen (Fig. 1 und 2).

2. Verfahren zur Herstellung eines Wälzlagerkäfigs mit Taschen zur Aufnahme der Wälzkörper, in welchen diese durch am Käfig angeformte, bei ihrem Einsetzen elastisch nachgebende Haltevorsprünge gehalten werden und zwischen den Haltevorsprüngen zweier benachbarter Käfigtaschen ein Einschnitt vorgesehen ist, dadurch gekennzeichnet, dass an den Haltevorsprüngen (14, 19) selbst Abstützvorsprünge (15, 20) angeformt sind, die nach dem Einführen der Wälzkörper (3) derart bleibend in die Einschnitte (13, 18) hinein verformt werden, dass sie durch unmittelbare Auflage oder mit geringem Spiel gegeneinander die benachbarten Haltevorsprünge (14, 19) abstützen (Fig. 3 bis 5).

3. Verfahren zur Herstellung eines Wälzlagerkäfigs nach Anspruch 1, dadurch gekennzeichnet, dass der zwischen zwei benachbarten Käfigtaschen angeordnete Abstützvorsprung (5) angestaucht wird, so dass ein Kopfteil (6) entsteht (Fig. 1).

4. Verfahren zur Herstellung eines Wälzlagerkäfigs nach Anspruch 1, dadurch gekennzeichnet, dass der Abstützvorsprung zwei Lappen (10) aufweist, deren jeder auf den jeweils benachbarten Haltevorsprung (9) zu abgebogen wird (Fig. 2).

5. Verfahren zur Herstellung eines Wälzlagerkäfigs nach Anspruch 2, dadurch gekennzeichnet, dass die Abstützvorsprünge (15) nach dem Einführen der Wälzkörper aus den Haltevorsprüngen (14) herausgeformt und in die Einschnitte (13) gebogen werden (Fig. 3 und 4).

6. Verfahren zur Herstellung eines Wälzlagerkäfigs nach Anspruch 2, dadurch gekennzeichnet, dass an den Enden der Haltevorsprünge (19) jeweils ein Abstützvorsprung (20) angeformt wird, der in die entsprechenden Einschnitte (18) gebogen wird (Fig. 5)

**Patent Claims**

1. Process of manufacturing a rolling bearing cage with pockets accommodating the rolling elements which, during their insertion, are held in the pockets by elastically yielding locating tongues and where, disposed between two adjacent locating tonques, respectively, a boss worked out of the cage material is extending from the cage body, characterized in that the bosses (5, 10) disposed between the locating tonques (4, 9) of two adjacent cage pockets (2) are so permanently shaped after insertion of the rolling elements (3, 11) that they rest against the adjacent locating tongues (4, 9) or reach up to them very closely (Fig. 1 and 2).

2. Process of manufacturing a rolling bearing cage with pockets accommodating the rolling elements which, during their insertion, are held in the pockets by elastically yielding locating tongues formed out of the cage, and where a notch is disposed between the locating tongues of two adjacent cage pockets, characterized in that the locating tongues (14, 19) themselves are provided with supporting prongs (15, 20) which are so permanently shaped into the notches (13, 18) that they brace the locating tongues (14, 19) either by means of a direct contact or a small clearance between each other (Fig. 3 to 5).

3. Process of manufacturing a rolling bearing cage as claimed in claim 1, characterized in that the supporting prong (5) disposed between two adjacent cage pockets is upset to form a head (6) (Fig. 1).

4. Process of manufacturing a rolling bearing cage as claimed in claim 1, characterized in that the supporting prong is provided with two fingers (10) each of which is bent towards the corresponding adjacent locating tongue (9) (fig. 2).

5. Process of manufacturing a rolling bearing cage as claimed in claim 2, characterized in that the supporting prongs (15), after insertion of the rolling elements, are formed out of the locating tongues (14) and bent into the notches (13) (fig. 3 and 4).

6. Process of manufacturing a rolling bearing cage as claimed in claim 2, characterized in that one supporting prong (20) each is formed at the ends of the locating tongues (19) and bent into the corresponding notches (18) (fig. 5).

**Revendications**

1. Procédé de fabrication d'une cage de roulement avec alvéoles pour loger les éléments roulants qui y sont retenues par des languettes de retenue formées à partir de la cage et se relâchant élastiquement lors de l'introduction des éléments roulants, prévoyant entre deux languettes de retenue adjacentes respectivement une baguette formée de la matière de cage et s'étendant du corps de la cage, caractérisé par le fait que les baguettes (5, 10) disposées entre les languettes de retenue (4, 9) de deux alvéoles (2) adjacents sont déformées après l'introduction des éléments roulants (3, 11) d'une manière si permanente qu'elles se mettent contre les languettes de retenue (4, 9) adjacentes ou se rapprochent de celles-ci de près (fig. 1 et 2).

2. Procédé de fabrication d'une cage de roulement avec alvéoles pour loger les éléments roulants qui y sont retenus par des languettes de retenue formées à partir de la cage et se relâchant élastiquement lors de l'introduction des éléments roulants, prévoyant entre les languettes de retenue de deux alvéoles adjacents une entaille, caractérisé par le fait que les languettes de retenue (14, 19) elles-mêmes sont pourvues de baguettes de support (15, 20) qui, après l'introduction des éléments roulants (3), sont déformées dans les entailles (13, 18) d'une manière si permanente qu'elles supportent les languettes de retenue (14, 19) par contact direct ou par un faible jeu entre elles (fig. 3 à 5).

3. Procédé de fabrication d'une cage de roulement selon la revendication 1, caractérisé par le fait que la baguette de support (5) disposée entre deux alvéoles adjacents est refoulée de manière à former une tête (6) (fig. 1).

4. Procédé de fabrication d'une cage de roulement selon la revendication 1, caractérisé par le fait que la baguette de support est pourvue de deux griffes (10), chacune pliée en direction de la languette de retenue (9) adjacente (fig. 2).

5. Procédé de fabrication d'une cage de roulement selon la revendication 2, caractérisé par le fait que les baguettes de support (15), après l'introduction des éléments roulants, sont formées à partir des languettes de retenue (14) et pliées dans les entailles (13) (fig. 3 et 4).

6. Procédé de fabrication d'une cage de roulement selon la revendication 2, caractérisé par le fait qu'une baguette de support (20) est formée à partir de chaque bout de languette de retenue (19) et pliée dans les entailles correspondantes (18) (fig. 5).

Fig. 1

Fig. 2

—

13    3    14    13    15

Fig. 3

↑
12

16

Fig. 4

9

Fig. 5